# EUROPEAN PATENT SPECIFICATION

(11) **EP 3 764 307 B1**
(45) Date of publication and mention of the grant of the patent: **28.05.2025**
(21) Application number: 20184777.9
(22) Date of filing: 08.07.2020
(51) Int. Cl.: G06Q 30/0601, G06V 40/10, G01B 11/02

(54) **CLOSED LOOP OBJECT FITTING TO USER MEMBER**
AN EIN BENUTZERELEMENT ANSCHLIESSBARES OBJEKT MIT GESCHLOSSENEM REGELKREIS
RACCORD D'UN OBJET EN BOUCLE FERMÉE À UN ÉLÉMENT UTILISATEUR

(30) Priority: 08.07.2019 EP 19184946
(43) Date of publication of application: 13.01.2021
(73) Proprietor: Richemont International S.A., 1752 Villars-sur-Glâne (CH)
(72) Inventor: Mathilde Grosgogeat, 1205 Genève (CH); Bruno Herrera, 01210 Ornex (FR); Léo Daguet, 01170 Gex (FR)
(74) Representative: Poindron, Cyrille

(56) References cited:
- EP-A1- 3 422 278
- WO-A1-2012/008930
- WO-A1-2018/059258
- US-A1- 2017 272 728
- US-B1- 10 321 728

## Description

The present invention relates to the manufacturing, adjusting, and delivery of closed loop objects, i.e. pieces of jewellery which are intended to be worn by a user around a member of the user. Typically, such closed loop object or piece of jewellery is a ring, or a bangle and thus presents an opening to be positioned around a wearing portion of the member.

In the present application, a closed loop object to be worn by a user designates an object having an opening for receiving a user's member. Such closed loop object is rigid, typically made of a non deformable material, such as metal. Thus, the opening of the closed loop object presents a size which might be not adjustable at the user's end. The closed loop object might be a ring or a bangle. However, the closed loop object might present an open loop, but in that case, the open loop is for aesthetic purpose and does not provide any capacity of adjustment to the size of the user's member.

Document EP3422278A1 discloses an image acquisition unit that acquires a photographic image showing a hand on which a card of a known size is placed, a card detection unit that detects a size of the card in the photographic image, a finger joint measurement unit that measures a size of the joint of the finger for the ring in the photographic image, a finger size estimation unit that estimates an actual size of the joint of the finger for the ring from a measured value of the size of the joint of the finger of the ring in the photographic image, based on a ratio between the known size of the card and the size of the card in the photographic image detected. A ring size determination unit determines a size of the ring based on an estimated actual size of the joint of the finger for the ring.

Document US2017272728A1 discloses a method for generating shoe recommendations that includes: capturing, by a scanning system, a plurality of depth maps of a foot, the depth maps corresponding to different views of the foot; generating, by a processor, a 3D model of the foot from the plurality of depth maps; computing, by the processor, one or more measurements from the 3D model of the foot; computing, by the processor, one or more shoe parameters based on the one or more measurements; computing, by the processor, a shoe recommendation based on the one or more shoe parameters; and outputting, by the processor, the shoe recommendation.

Document EP3261044A1 discloses the use of body scanner to generate contour map of a user so as to configure products for the user after the body scan. However, this method does not give any hint how to adequately design and manufacture a closed loop object to wear on a wearing portion of a user member adjacent to a joint of same member.

The present invention aims to address the above mentioned drawbacks of the prior art, and to propose first a method for manufacturing, or for adjusting or for determining the size of a closed loop object to be worn by a user around a user's member which allows a precise fitting so that the closed loop object will be easy to pass over any joint between the wearing portion of the member extremity, but which will also fit closely and comfortably to the wearing portion without any risk of unexpected loss. An object of the above method is also to minimize the manufacturing or rework operations, which typically increase costs or delivery time.

In this aim, a first aspect of the invention is a computer implemented training method for manufacturing, or for determining the size of, a piece of jewellery forming a rigid closed loop object to be worn by a user around a user's member,
wherein the said member comprises:
   - at least one wearing portion where the rigid closed loop object is intended to be worn,
   - a member extremity,
   - at least one joint, arranged between the wearing portion and the member extremity,
wherein the rigid closed loop object comprises at least one opening for passing over the joint,
wherein the training method comprises:
   - a training phase, with the steps of:
      - taking pictures of said member of a plurality of models or individuals, said pictures showing at least the wearing portion and the joint of each model or individual,
      - measuring at least one opening dimension of the opening of a rigid closed loop object worn by each model or individual,
      - supplying to a learning machine: the pictures, and the measured opening dimensions, so that the learning machine can:
      - measure a size of the joint and a size of the wearing portion of each model or individual,
      - associate the opening dimension to at least one of a size of the joint and or a size of the wearing portion.

According to the above embodiment, the computer implemented method comprises a training phase with supplying to a learning machine a series of data issued form real tests related to the member intended to wear the closed loop object, and to the closed loop object, so as to train the learning machine. It has to be noted that the learning machine is supplied with information related not only to the joint, but also to information related to the wearing portion, so that the efficiency and accuracy are increased.

In practice, a group of persons (i.e. individuals or models) is selected/chosen, and each model or individual has to wear a closed loop object of a given size and a picture showing the member (showing at least the wearing portion and a joint located between the wearing portion and the member's extremity) is taken.

In particular, the learning machine is supplied with the images of members of individuals to determine or measure the size of the joint and/or of the wearing portion. Then the learning machine can associate the dimension of the opening of the closed loop object worn to the size of the joint and/or of the wearing portion. That is to say that all the users wear a given closed loop object, all user members are pictured to supply a set of data during the training phase. It is to be noted that the closed loop objects are standard and pre-manufactured with manufacturing instructions not coming from the learning machine, as the latter has not been fully trained yet, so that it cannot predict dimensions yet.

According to an embodiment, the learning machine comprises a neural network or a deep neural network. This kind of learning machine is well suited to image analysis.

According to an embodiment, the training phase might comprise:
- recording, for each individual, at least one information related to the fitting of the closed loop object to the model's wearing portion,
so that the learning machine can associate the fitting information to the opening dimension and to the size of the joint and to the size of the wearing portion.

Each individual gives an information about the fitting of the closed loop to the wearing portion, and the learning machine can also associate the dimension of the opening of the closed loop object to the information about the fitting of the closed loop object to the wearing portion.

According to an embodiment, the fitting information which might be received from the individual might be chosen from a list comprising at least one of the following criteria:
- the closed loop object fits adequately the wearing portion,
- the closed loop object fits too loosely the wearing portion,
- the closed loop object fits too tightly the wearing portion,
- the closed loop object does not pass over the joint,
- the closed loop object is not retained by the joint.

According to the above embodiment, the learning machine can associate the dimension of the opening to different kinds of fitting information, to increase the possibilities of future prediction, or to lower the amount of persons or individuals required in the group of tester. Instead of having for example 100 individuals each testing one closed loop object, 50 individuals can each test two objects of different sizes if they give the information fit / not fit for each of the two tested closed loop objects. In particular, at least a plurality of individuals testing the closed loop objects wear at least two different closed loop objects, to give feed back about the fitting. During the training phase, accuracy might be improved if a same user tries several closed loop object to give feedback about fitting for each tried object, so that impact on fitting of a change of size can be learned / weighted by the learning machine.

According to an embodiment, the step of measuring at least one opening dimension of the opening of a closed loop object worn by each model might comprise the steps of:
- taking at least one picture of the opening of the closed loop object,
- supplying the picture to the learning machine so that the learning machine can measure the opening dimension.

Alternatively or in addition, the step of measuring at least one opening dimension of the opening of a closed loop object worn by each model might comprise the steps of:
- measuring the opening dimension with a calliper or a ruler, or testing the individual's member with a sizer or gauge to get the dimension of the opening of the closed loop object,
- supplying the opening dimension to the learning machine.

The above mentioned sizer or gauge is typically a rigid sheet bearing several openings having different sizes through which a user can introduce its member to determine the adequate size of its member.

According to an embodiment, each step of taking a picture might include a step of positioning an object or a pattern with a predetermined dimension in the field of imaging.

According to the above embodiment, the object or pattern positioned in the field of imaging will be recognized by the learning machine and this will allow to accurately determine the scale and size of the other objects shown on the picture.

According to an embodiment:
the closed loop object might be a ring,
the member might be a finger and preferably the ring finger,
the wearing portion might be a phalanx, preferably the proximal phalanx, and the joint might be the joint between two phalanges, and preferably the joint between the proximal phalanx and the intermediate phalanx.

The above method is well suited to determine the size of a ring as the applicant determined that the fitting of the ring to the wearing portion depends on the size of the phalanx joints for allowing the ring to pass over the joints, but the fitting also closely depends on the wearing portion characteristics. In particular, the proximal phalanx shape is an important feature to take into account (width, shape, lean or fat, skin texture....) and a learning machine can take all these features into account. In particular, analysis of the pictures by the learning machine to take all the above mentioned parameters into account is an interesting aspect of the invention.

According to an embodiment, the learning machine might associate the opening dimension to at least one of:
- the width of the wearing portion,
- the width of the joint,
- the ratio between the width of the wearing portion and the width of the joint,
- the shape of the member.

According to an embodiment, the step of taking a picture of the member comprises a step of retro illuminating the member, so as to picture an outside contour of the member, and:
- a contour or shape of bones of said member, and/or
- a thickness of skin of said member, and/or
- a contour or shape of flesh of said member.

A back light illuminating the member, in the case of a finger, can increase the amount of features detected by the learning machine. In particular, with back lighting, the picture of the user's member can show details of the internal member space, such as bones, muscle, fat, skin thickness. The learning machine can then deduct dimensions or shape, or body characteristics from the picture, to increase the number of parameters taken into account, so that the level of accuracy of future prediction is enhanced. In other words, the back lighting is performed with enough light power to show internal member space, so as to typically see on each picture bones' shadow (no light transmitted), soft tissues such as muscle, fat, skin... (partial with more or less light transmission), and external contour (delimited by full light transmission).

According to an embodiment, the learning machine might associate the opening dimension to at least one of:
- a bone width,
- a skin thickness,
- a flesh width.

According to an embodiment, the training phase is performed until a predetermined amount of individuals give feedback. The training phase takes the feedback of at least 100 persons, preferably at least 150 persons, and more preferably 200 persons are pictured, giving feedback during the training phase.

A second aspect of the invention relates to a computer implemented predicting method for manufacturing, or for determining the size of, a piece of jewellery forming a rigid closed loop object to be worn by a user around a user's member,
wherein the method comprises:
- a predicting phase, with the steps of:
   - taking at least one picture of a member of a user, said at least one picture showing at least the wearing portion and the joint of the user,
   - supplying the picture of a member of a user to a learning machine trained according to the first aspect of the invention, so that the learning machine can:
      - measure a size of the joint and a size of the wearing portion of the user,
      - predict a fitting opening dimension of a rigid closed loop object chosen by the user.

The predicting phase, occurring after the learning phase, can accurately predict a size of a closed loop object to be worn by the user, without any test with a mock up or test object. In other words, with such prediction, a future manufacturing or adjusting of the size or delivering of the closed loop object can be done directly to end with a comfortable and fitting wearing, with no preliminary physical test for the user. Only one picturing of the user's member is necessary to initiate the predicting phase to end with the predicted fitting opening dimension, which is low burden for the user. The overall process is simplified and new possibilities are offered to the users: it is now possible to select a closed loop object from a catalogue, to take a picture of the member intended for wearing the closed loop object, and to place an order, to receive later the fully finished closed loop object, which will fit with no further adjustment. Indeed, as the learning phase has occurred, the trained learning machine is able to finely determine the adequate size of the object to be manufactured. In other words, the disclosure provides a preliminary learning phase as above described, and a subsequent predicting phase, distinct and not overlapping the training phase, so that the real objects manufactured according to the predicted dimensions are fitting the user's member, with no need to adapt or resize or replace / remanufacture of a new object.

A third aspect of the invention relates to a computer implemented method for manufacturing, or for adjusting the size of, a closed loop object to be worn by a user around a user's member,
wherein the method comprises:
- manufacturing, or adjusting the size of, a closed loop object according to the fitting opening dimension predicted according to the computer implemented method predicting method of the second aspect of invention, or
- choosing within a set of pre manufactured closed loop objects a closed loop object according to the predicted fitting opening dimension predicted according to the predicting method of the second aspect of invention.

Advantageously, the step of taking a picture of the user's member during the predicting phase of second aspect of the invention might be performed by the user, and the picture is sent by the user to a remote server.

Advantageously, the manufactured or adjusted or chosen closed loop object might be shipped to the user.

It is to be understood that the above mentioned embodiments might be combined together or dissociated from each other as long as there is no technical inconsistency.

Other features and advantages of the present invention will appear more clearly from the following detailed description of particular non-limitative examples of the invention, illustrated by the appended drawings where:
- figure 1 represents a hand of a user wearing two closed loo objects: a ring and a bangle ;
- figure 2 represents the ring of the figure 1 ;
- figure 3 represents a hand with typical dimensions to measure and/or to take into account to determine an adequate opening dimension of the ring of figure 2 ;
- figure 4 represents the hand of figure 3 with other dimensions to measure and/or to take into account to determine an adequate opening dimension of the ring of figure 2 ;
- figure 5 represents a learning phase of a learning machine ;
- figure 6 represents a predicting phase of the learning machine.

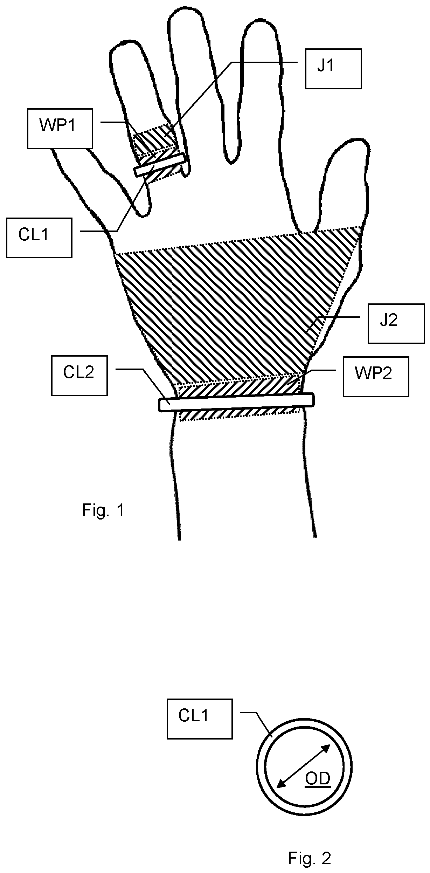

Figure 1 represents a hand of a user wearing two closed loop objects CL1 and CL2. The fist closed loop object CL1 is a ring, and the second closed loop object CL2 is a bangle.

The closed loop object CL1 is positioned on a first wearing portion WP1, which is close to a first joint J1. In the present case, the first wearing portion WP1 is the proximal phalanx of the ring finger, and the first joint is the joint between the proximal phalanx and the medium phalanx.

The second closed loop object CL2 is positioned on a second wearing portion WP2, close to a second joint J2. In the present case, the second wearing portion WP2 is located in vicinity of the wrist and the second joint J2 is the palm of the hand. However, the second wearing portion could be the distal portion of the forearm, and the second joint could be the wrist or palm or hand of the user.

Figure 2 shows the closed loop object CL1 (ring) of figure 1. The ring presents an opening having an opening dimension OD, which is in the present case the internal diameter. In the rest of the present application, this opening dimension will be assumed to be the one to be determined accurately for ensuring an adequate fitting to the user member (the ring finger of figure 1). However, the present method can also consider other dimensions to be relevant to ensure an adequate fitting, such as the width of the ring, for instance.

Adequate fitting in the present case means that the ring is sized so as to at least:
- allow easy positioning of the ring onto the first wearing portion WP1, i.e. to pass easily with no difficulty over the first joint J1,
- stay stably over the first wearing portion WP1, i.e. the ring will not fall unexpectedly off the finger,
- not generate pain or discomfort to the user because it is too tightly adjusted onto the first wearing portion WP1. The same holds for the second closed loop object CL2: the opening dimension shall be sized adequately to provide a comfortable and secured wearing.

In that aim, the method of the present invention proposes to take into account some dimensions of the member (hand in the present case) so as to predict a predicted fitting opening dimension.

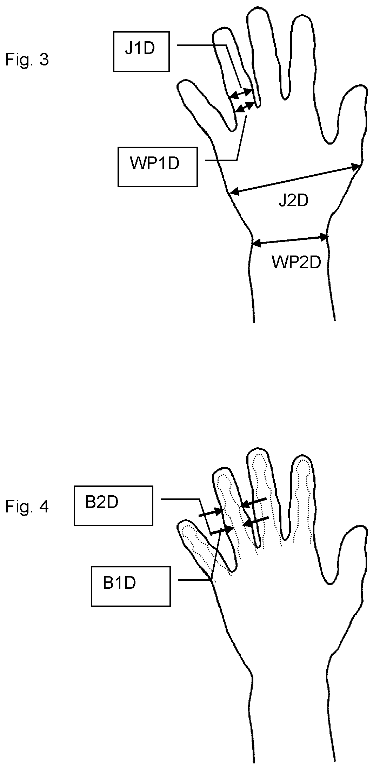

In particular, and as shown on figure 3, the method can take into account several dimensions of the user's member, such as the width WP1D of the first wearing portion WP1, the width J1D of the first joint J1... for determining the adequate size of the first closed loop object CL1. For the second closed loop object CL2, the width WP2D of the second wearing portion WP2 and/or the width J2D of the second joint J2 might be considered.

Pictures of the hand can be easily taken and then analysed by a software (a neural network or a deep neural network) to obtain the relevant dimensions. As an example, feedforward neural network might be used, and in particular a multilayer perceptron can be used to implement the training method according to the present invention.

Other methods are also encompassed to get the dimensions of the joint and wearing portion, such as range imaging (stereo triangulation with stereo or multiple camera setup, time of flight technique, structured light...). Devices such as body scanner, Lidar, laser range finders, stereo or multiple camera can be used.

In particular, the picturing can be advantageously performed with a stereo vision system so as to provide to a computer unit digital images taken by two cameras, displaced from one another, to obtain two differing views on the same scene, comprising the user member. Based on the distance separating the two cameras, a given feature found in the two images shows a parallax shift, enabling to deduct / calculate dimensions of the features pictured by the stereo vision system.

Therefore, such stereo vision system enables dimension assessment directly, with no gauge or reference object of known dimension. This stereo vision system might be used during the training phases, as well as during the prediction phase.

Alternatively, the method can use consecutive frames taken from a same camera, to obtain several perspectives from the same object (the closed loop object and/or the user member), so as to identify and track specific points or anchors in the frames, to finally estimate the distances between all those specific points or anchors. This method is typically qualified as Simultaneous Localization And Mapping (SLAM).

Still alternatively, the method can use an inertial measurement unit coupled with a camera (a RGB camera for example), to supply several and consecutive frames of the same object, with identification and follow up of specific points or anchors in the frames and their relative position of the camera, to finally estimate the distances between all those specific points or anchors.

Still alternatively, the method can use depth measurement to rebuilt a 3D model so as to deducts the dimensions of the closed loop object and/or the user member. In this aim, several techniques are available, such as time of flight technique (TOF), picturing with structured light in visible or non visible range (Compared with the stereo vision method, the structured light replaces one of the cameras with a projector. The projector emits some types of light, which include single-point pattern, single-line pattern, and coded pattern, to the objects. The pattern reflection is captured by the camera. Depth information can be calculated based on the triangulation). To avoid calibration, predetermined displacement of the target (the closed loop object and/or the user member) can be imposed, so as to be able to deduct target dimensions from a measurement done by a depth measurement system.

In other words, the above methods (range imaging, or stereo imaging, or SLAM, or with inertial measurement unit, or with depth measurement) allow to determine the dimensions of the user member and/or of the closed loop object and its opening, directly from the picture, without requiring any gauge or reference object of known dimension. Therefore, the method according to the present invention does not require any physical measurement of the closed loop object during the training phase, and/or does not require any reference object of known dimension during the predicting phase.

In addition, the method (during training and or prediction phase) can comprise the step of placing the user member at a given and predetermined distance from a picturing unit, so as to further increase accuracy. One might provide an apparatus with a holding portion arranged to receive the picturing apparatus or unit (a stereo vision system), and a rest portion, arranged to receive / support a user member.

The picturing might be done by the user, or by a vendor and might be sent to a remote server/computer for analysis.

It is also encompassed by the present method to take other information/dimensions into account. As shown on figure 4, the internal structure of the hand might be analysed, with, for example, a back light illuminating the hand during the picturing. The picture will then show internal bones or shapes (see dotted lines on figure 4) for the computer analysis so that the machine learning can measure and take into account bones width/dimensions and deduct from the external dimensions a ratio of muscle or fat to increase the accuracy of future prediction.

In particular, the method can take into account the bone dimension B1D of the proximal phalanx and the bone dimension B2D at the joint between the proximal phalanx and the middle or medium phalanx. From these measures, it is possible to consider various ratios between the bone dimensions and outer dimensions of the finger such as above mentioned dimensions J1D and/or WP1D to deduct a muscle ratio, fat ratio, or even skin thickness.

All these parameters or dimensions or ratios can be taken into account to predict a fitting opening dimension for the closed loop object to be worn onto the wearing portion.

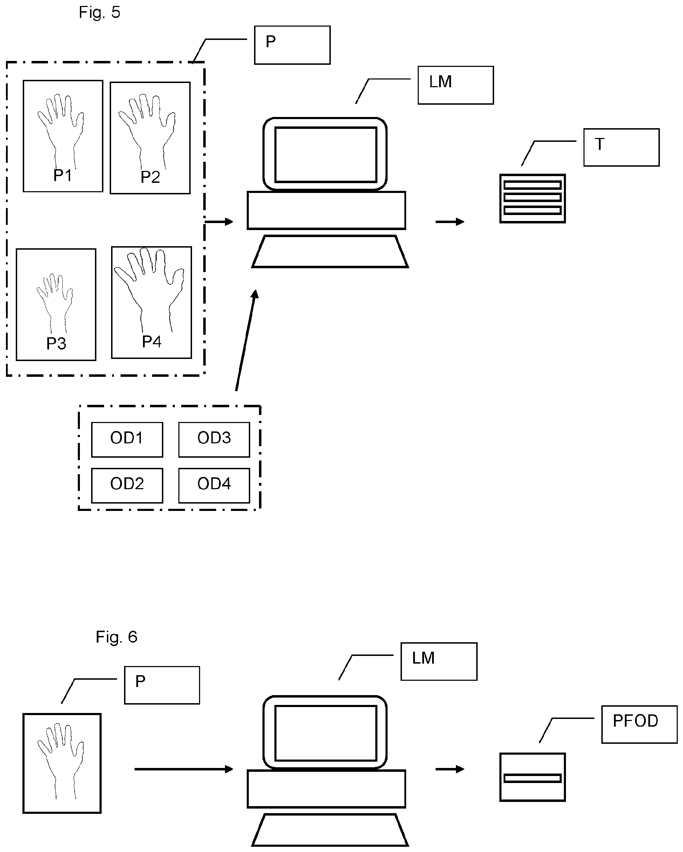

Figure 5 shows how a learning machine LM can be trained to give predictions in a next phase. The training method can be based on selecting a group of individuals for implementing the following steps for each individual of the group. A picture or a series of pictures can be taken to show the hand of each individual and in particular, in case the closed loop object is a ring, to show the first wearing portion WP1 (the proximal phalanx) and the first joint J1.

Each individual will also wear a closed loop object (a ring) which is previously measured and which is chosen to fit the wearing portion in comfortable way. In case of a ring, the internal diameter can be measured with a calliper, with a ruler or with a sizer gauge (a plate with multiple holes having given sizes). Pictures of the closed loop object CL1, CL2 can also be used.

All the pictures for each individual and the opening dimension measured are submitted to a learning machine LM. In detail, for the first individual, picture P1 and opening dimension OD1 are submitted. For the second individual, picture P2 and opening dimension OD2 are submitted, and the same for each individual of the group.

The pictures can be taken with a reference object or pattern with known size, to allow easy recognition and scaling for the learning machine LM.

With these data, the learning machine LM can extract from the pictures all the relevant dimensions, shapes, ratios above mentioned, and associate this picture information to the corresponding opening dimension provided to the learning machine LM. For example, a table T can be generated.

In addition, each individual can also give fitting information (if the ring is loose, or tight or lost during experience...). This fitting information can be also supplied to the learning machine to be included in the table T.

Figure 6 illustrates a predicting phase implemented once the learning machine LM has been trained with a sufficiently large group of individuals (50 persons, or 100 persons or more).

During this predicting phase, a user hand is pictured, and this picture P is sent to the learning machine LM. Analysis of the picture P is performed to extract the relevant data (above mentioned dimensions such as WP1D, J1D, B1D, B2D..., shape of the hand, ratios, ...) and the learning machine LM can output a predicted fitting opening dimension PFOD for a ring that will adequately fit to the user hand, with no physical test.

Since the prediction is done by taking into account one or several of the above mentioned parameters, the predicted fitting opening dimension is more accurate and customized to the user morphology.

During the predicting phase, pictures of the hand can be easily taken and then analysed by a software (a neural network or a deep neural network) to obtain the relevant dimensions. As an example, feedforward neural network might be used, and in particular a multilayer perceptron can be used to implement the predicting method according to the present invention.

Other methods are also encompassed to get the dimensions of the joint and wearing portion, such as range imaging (stereo triangulation with stereo or multiple camera setup, time of flight technique, structured light...). Devices such as body scanner, Lidar, laser range finders, stereo or multiple camera can be used.

Finally, the prediction of the predicted fitting opening dimension might be done by a software (a neural network or a deep neural network). As an example, feedforward neural network might be used, and in particular a multilayer perceptron can be used.

Consequently, manufacturing of a ring can be done for further delivery to the user, after the order is placed. Other possibilities are a step of adjusting the size of the ring, or selecting a ring within a pre-manufactured set of rings.

At this stage, it has to be understood that the training phase and the predicting phase allow to give a predicted fitting opening dimension PFOD to manufacture or adjust or select the adequate ring. In other words, it is not needed anymore to manufacture in advance sets of rings for testing or adjusting a given ring for a customer. The manufacturing or adjusting or selecting step is done after the user hand has been pictured and analysed to give in one go the adequate predicted fitting opening dimension.

Such process enables to reduce the stock required in retailing shops, and/or increases the accuracy of manufacturing - adjusting for perfect fitting and/or enables to place an order via internet for receiving a closed loop object (a ring) which fits the user member (finger).

It is of course understood that obvious improvements and/or modifications for the one skilled in the art may be implemented, still being under the scope of the invention as it is defined by the appended claims.

In particular, only the internal diameter of the opening of the closed loop object has been described in detail, but the method can also deal with other dimensions such as the thickness of the closed loop object, connecting radiuses between surfaces. Other parameters can also be taken into account, such as the weight, the material, the roughness.

It has also to be mentioned that the method can also be used for non circular objects.

Other members can be also analyzed, such as the leg and foot, where closed loop objects can also be worn.

The above specification mentions that pictures are taken, but it has to be taken in mind that the present invention can also deal with movies, which are a series of pictures. Black and white pictures/movies can be taken, but color images can also be used.

Further, it is to be noted that the training phase is distinct and followed by the predicting phase. However, it is possible to provide or implement a feed back phase, simultaneously or after the predicting phase, to take into account customer feedback.

Indeed, the training phase is performed with a limited group of individuals asked to wear and give fitting information about premanufactured closed loop object, to set up a database used for training the learning machine.

The predicting phase is performed by the (trained) learning machine to predict dimensions and manufacture accordingly a closed loop object to be sold to a customer, and it can be useful to take into account the feedback of the customers to further improve the accuracy of the prediction provided by the learning machine.

During such feed back phase, not necessarily all the customers should give feedback, so it should not to be considered as a training phase as such. In other words, the encompassed feed back phase is useful for improving a running and trained learning machine.

## Claims

1. Computer implemented method comprising:
a computer implemented training method for manufacturing, or for determining the size of, a piece of jewellery forming a rigid closed loop object (CL1, CL2) to be worn by a user around a user's member,
wherein the said member comprises:
- at least one wearing portion (WP1, WP2) where the rigid closed loop object (CL1, CL2) is intended to be worn,
- a member extremity,
- at least one joint (J1, J2), arranged between the wearing portion (WP1, WP2) and the member extremity,
wherein the rigid closed loop object (CL1, CL2) comprises at least one opening for passing over the joint (J1, J2),
wherein the training method comprises:
• a training phase, with the steps of:
- taking pictures of said member of a plurality of individuals, said pictures showing at least the wearing portion (WP1, WP2) and the joint (J1, J2) of each individual,
- measuring at least one opening dimension of the opening of a rigid closed loop object (CL1, CL2) worn by each individual,
- supplying to a learning machine: the pictures, and the measured opening dimensions, so that the learning machine can:
- measure a size of the joint (J1, J2) and a size of the wearing portion (WP1, WP2) of each individual,
- associate the opening dimension to at least one of a size of the joint (J1, J2) and or a size of the wearing portion (WP1, WP2),
the computer implemented method further comprising:
a computer implemented predicting method for manufacturing, or for determining the size of, a piece of jewellery forming a rigid closed loop object (CL1, CL2) to be worn by a user around a user's member,
wherein the computer implemented predicting method comprises:
• a predicting phase, with the steps of:
- taking at least one picture of a member of a user, said at least one picture showing at least the wearing portion (WP1, WP2) and the joint (J1, J2) of the user,
- supplying the picture to a learning machine trained according to said computer implemented training method, so that the learning machine can:
- measure a size of the joint (J1, J2) and a size of the wearing portion (WP1, WP2) of the user,
- predict a fitting opening dimension of a rigid closed loop object (CL1, CL2) chosen by the user.

2. Computer implemented method, according to claim 1, wherein the training phase of the computer implemented training method comprises:
- recording, for each individual, at least one information related to the fitting of the rigid closed loop object (CL1, CL2) to the individual's wearing portion (WP1, WP2),
so that the learning machine can associate the fitting information to the opening dimension and to the size of the joint (J1, J2) and to the size of the wearing portion (WP1, WP2).

3. Computer implemented method according to claim 2, wherein during the computer implemented training method, the fitting information is received from the individual and is chosen from a list comprising at least one of the following criteria:
- the rigid closed loop object (CL1, CL2) fits adequately the wearing portion (WP1, WP2),
- the rigid closed loop object (CL1, CL2) fits too loosely the wearing portion (WP1, WP2),
- the rigid closed loop object (CL1, CL2) fits too tightly the wearing portion (WP1, WP2),
- the rigid closed loop object (CL1, CL2) does not pass over the joint (J1, J2),
- the rigid closed loop object (CL1, CL2) is not retained by the joint (J1, J2).

4. Computer implemented method according to anyone of claims 1 to 3, wherein during the computer implemented training method, the step of measuring at least one opening dimension of the opening of a rigid closed loop object (CL1, CL2) worn by each individual comprises the steps of:
- taking at least one picture of the opening of the rigid closed loop object (CL1, CL2),
- supplying the picture of the opening of the rigid closed loop object to the learning machine so that the learning machine can measure the opening dimension.

5. Computer implemented method according to anyone of claims 1 to 4, wherein during the computer implemented training method, each step of taking a picture includes a step of positioning an object or a pattern with a predetermined dimension in the field of imaging.

6. Computer implemented method according to anyone of claims 1 to 5, wherein the rigid closed loop object (CL1, CL2) is a ring,
wherein the member is a finger and preferably the ring finger,
wherein the wearing portion (WP1, WP2) is a phalanx, preferably the proximal phalanx,
and wherein the joint (J1, J2) is the joint between two phalanges, and preferably the joint between the proximal phalanx and the intermediate phalanx.

7. Computer implemented method according to anyone of claims 1 to 6, wherein during the computer implemented training method, the learning machine associates the opening dimension to at least one of:
- the width (WP1D, WP2D) of the wearing portion (WP1, WP2),
- the width (J1D, J2D) of the joint (J1, J2),
- the ratio between the width of the wearing portion (WP1, WP2) and the width of the joint (J1, J2),
- the shape of the member.

8. Computer implemented method according to anyone of claims 1 to 7, wherein during the computer implemented training method, the step of taking a picture of the member comprises a step of retro illuminating the member, so as to picture an outside contour of the member, and:
- a contour or shape of bones of said member, and/or
- a thickness of skin of said member, and/or
- a contour or shape of flesh of said member.

9. Computer implemented method according to claim 8, wherein during the computer implemented training method, the learning machine associates the opening dimension to at least one of:
- a bone width,
- a skin thickness,
- a flesh width.

10. Computer implemented method according to any one of claims 1 to 9, wherein the method further comprises:
- manufacturing, or adjusting the size of, a rigid closed loop object (CL1, CL2) according to the fitting opening dimension predicted according to said computer implemented predicting method, or
- choosing within a set of pre manufactured rigid closed loop objects a rigid closed loop object (CL1, CL2) according to the predicted fitting opening dimension predicted according to said computer implemented predicting method.

11. Computer implemented method according to claim 10, wherein the step of taking a picture of the user's member during the predicting phase is performed by the user, and the picture is sent by the user to a remote server,
and wherein the manufactured or adjusted or chosen rigid closed loop object (CL1, CL2) is shipped to the user.

## Patentansprüche

1. Computerimplementiertes Verfahren umfassend:
ein computerimplementiertes Trainingsverfahren zur Herstellung oder zur Bestimmung der Größe eines Schmuckstücks, das ein starres geschlossenes Schleifenobjekt (CL1, CL2) bildet, das von einem Benutzer um eine Gliedmaße des Benutzers getragen wird,
wobei die Gliedmaße umfasst:
- mindestens einen Tragebereich (WP1, WP2), an dem das starre geschlossene Schleifenobjekt (CL1, CL2) getragen werden soll,
- eine Gliedmaßenextremität,
- mindestens ein Gelenk (J1, J2), das zwischen dem Tragebereich (WP1, WP2) und der Gliedmaßenextremität angeordnet ist,
wobei das starre geschlossene Schleifenobjekt (CL1, CL2) mindestens eine Öffnung aufweist, um über das Gelenk (J1, J2) geschoben zu werden,
wobei das Trainingsverfahren umfasst:
• eine Trainingsphase mit den folgenden Schritten:
- Aufnehmen von Bildern der Gliedmaße von einer Vielzahl von Personen, wobei die Bilder mindestens den Tragebereich (WP1, WP2) und das Gelenk (J1, J2) jeder Person zeigen,
- Messen mindestens eines Öffnungsmaßes der Öffnung eines starren geschlossenen Schleifenobjekts (CL1, CL2), das von jeder Person getragen wird,
- Liefern der Bilder und der gemessenen Öffnungsmaße an eine lernende Maschine, so dass die lernende Maschine zu Folgendem in der Lage ist:
- Messen einer Größe des Gelenks (J1, J2) und einer Größe des Tragebereichs (WP1, WP2) jeder Person,
- Zuordnen des Öffnungsmaßes zu mindestens einer von einer Größe des Gelenks (J1, J2) und/oder einer Größe des Tragebereichs (WP1, WP2),
das computerimplementierte Verfahren ferner umfassend:
ein computerimplementiertes Vorhersageverfahren zur Herstellung oder zur Bestimmung der Größe eines Schmuckstücks, das ein starres geschlossenes Schleifenobjekt (CL1, CL2) bildet, das von einem Benutzer um eine Gliedmaße des Benutzers getragen wird,
wobei das computerimplementierte Vorhersageverfahren umfasst:
• eine Vorhersagephase mit den folgenden Schritten:
- Aufnehmen mindestens eines Bildes einer Gliedmaße eines Benutzers, wobei das mindestens eine Bild mindestens den Tragebereich (WP1, WP2) und das Gelenk (J1, J2) des Benutzers zeigt,
- Liefern des Bildes an eine lernende Maschine, die gemäß dem computerimplementierten Trainingsverfahren trainiert wurde, so dass die lernende Maschine zu Folgendem in der Lage ist:
- Messen einer Größe des Gelenks (J1, J2) und einer Größe des Tragebereichs (WP1, WP2) des Benutzers,
- Vorhersagen eines passenden Öffnungsmaßes für ein starres geschlossenes Schleifenobjekt (CL1, CL2), das von dem Benutzer ausgewählt wird.

2. Computerimplementiertes Verfahren nach Anspruch 1, wobei die Trainingsphase des computerimplementierten Trainingsverfahrens umfasst:
- Aufzeichnen von mindestens einer Information für jede Person, die sich auf die Anpassung des starren geschlossenen Schleifenobjekts (CL1, CL2) an den Tragebereich (WP1, WP2) der Person bezieht,
so dass die lernende Maschine die Anpassungsinformation dem Öffnungsmaß und der Größe des Gelenks (J1, J2) und der Größe des Tragebereichs (WP1, WP2) zuordnen kann.

3. Computerimplementiertes Verfahren nach Anspruch 2, wobei während des computerimplementierten Trainingsverfahrens die Anpassungsinformation von der Person empfangen wird und aus einer Liste ausgewählt wird, die mindestens eines der folgenden Kriterien umfasst:
- das starre geschlossene Schleifenobjekt (CL1, CL2) passt angemessen am Tragebereich (WP1, WP2),
- das starre geschlossene Schleifenobjekt (CL1, CL2) sitzt zu locker am Tragebereich (WP1, WP2),
- das starre geschlossene Schleifenobjekt (CL1, CL2) sitzt zu eng am Tragebereich (WP1, WP2),
- das starre geschlossene Schleifenobjekt (CL1, CL2) kann nicht über das Gelenk (J1, J2) geschoben werden,
- das starre geschlossene Schleifenobjekt (CL1, CL2) wird nicht von dem Gelenk (J1, J2) zurückgehalten.

4. Computerimplementiertes Verfahren nach einem der Ansprüche 1 bis 3, wobei während des computerimplementierten Trainingsverfahrens der Schritt des Messens mindestens eines Öffnungsmaßes der Öffnung eines starren geschlossenen Schleifenobjekts (CL1, CL2), das von jeder Person getragen wird, die folgenden Schritte umfasst:
- Aufnehmen von mindestens einem Bild der Öffnung des starren geschlossenen Schleifenobjekts (CL1, CL2),
- Liefern des Bildes der Öffnung des starren geschlossenen Schleifenobjekts an die lernende Maschine, so dass die lernende Maschine das Öffnungsmaß messen kann.

5. Computerimplementiertes Verfahren nach einem der Ansprüche 1 bis 4, wobei während des computerimplementierten Trainingsverfahrens jeder Schritt des Aufnehmens eines Bildes einen Schritt des Positionierens eines Objekts oder eines Musters mit einer vorbestimmten Abmessung im Bildfeld einschließt.

6. Computerimplementiertes Verfahren nach einem der Ansprüche 1 bis 5,
wobei das starre geschlossene Schleifenobjekt (CL1, CL2) ein Ring ist,
wobei die Gliedmaße ein Finger und vorzugsweise der Ringfinger ist,
wobei der Tragebereich (WP1, WP2) ein Fingerglied, vorzugsweise das proximale Fingerglied, ist,
und wobei das Gelenk (J1, J2) das Gelenk zwischen zwei Fingergliedern ist, und vorzugsweise das Gelenk zwischen dem proximalen Fingerglied und dem Zwischenglied.

7. Computerimplementiertes Verfahren nach einem der Ansprüche 1 bis 6, wobei während des computerimplementierten Trainingsverfahrens die lernende Maschine das Öffnungsmaß mindestens einem von Folgendem zuordnet:
- der Breite (WP1D, WP2D) des Tragebereichs (WP1, WP2),
- der Breite (J1D, J2D) des Gelenks (J1, J2),
- dem Verhältnis zwischen der Breite des Tragebereichs (WP1, WP2) und der Breite des Gelenks (J1, J2),
- der Form der Gließmaße.

8. Computerimplementiertes Verfahren nach einem der Ansprüche 1 bis 7,
wobei während des computerimplementierten Trainingsverfahrens der Schritt des Aufnehmens eines Bildes der Gließmaße einen Schritt der Hinterleuchtung der Gließmaße umfasst, um eine Außenkontur der Gließmaße abzubilden, und:
- eine Kontur oder Form von Knochen der Gliedmaße, und/oder
- eine Dicke der Haut der Gliedmaße, und/oder
- eine Kontur oder Form des Fleisches der Gliedmaße.

9. Computerimplementiertes Verfahren nach Anspruche 8, wobei während des computerimplementierten Trainingsverfahrens die lernende Maschine das Öffnungsmaß mindestens einem von Folgendem zuordnet:
- einer Knochenbreite,
- einer Hautdicke,
- einer Fleischbreite.

10. Computerimplementiertes Verfahren nach einem der Ansprüche 1 bis 9,
wobei das Verfahren weiter umfasst:
- Herstellen, oder Anpassen der Größe, eines starren geschlossenen Schleifenobjekts (CL1, CL2) entsprechend dem passenden Öffnungsmaß, das gemäß dem computerimplementierten Vorhersageverfahren vorhergesagt wurde, oder
- Auswählen eines starren geschlossenen Schleifenobjekts (CL1, CL2) aus einem Satz vorgefertigter starrer geschlossener Schleifenobjekte entsprechend dem vorhergesagten passenden Öffnungsmaß, das gemäß dem computerimplementierten Vorhersageverfahren vorhergesagt wurde.

11. Computerimplementiertes Verfahren nach Anspruch 10, wobei der Schritt des Aufnehmens eines Bildes der Gließmaße des Benutzers während der Vorhersagephase durch den Benutzer durchgeführt wird und das Bild durch den Benutzer an einen entfernten Server gesendet wird,
und wobei das hergestellte oder angepasste oder ausgewählte starre geschlossene Objekt (CL1, CL2) an den Benutzer versandt wird.

## Revendications

1. Procédé mis en œuvre par ordinateur comprenant :
un procédé d'entraînement mis en œuvre par ordinateur pour la fabrication ou pour la détermination de la taille d'un bijou formant un objet rigide en boucle fermée (CL1, CL2) destiné à être porté par un utilisateur autour d'un membre de l'utilisateur,
dans lequel ledit membre comprend :
- au moins une partie de port (WP1, WP2) sur laquelle l'objet rigide en boucle fermée (CL1, CL2) est destiné à être porté,
- une extrémité de membre,
- au moins une articulation (J1, J2) située entre la partie de port (WP1, WP2) et l'extrémité de membre,
dans lequel l'objet rigide en boucle fermée (CL1, CL2) comprend au moins une ouverture pour passer sur l'articulation (J1, J2),
dans lequel le procédé d'entraînement comprend :
• une phase d'entraînement présentant les étapes suivantes :
- prendre des photos dudit membre d'une pluralité d'individus, lesdites photos montrant au moins la partie de port (WP1, WP2) et l'articulation (J1, J2) de chaque individu,
- mesurer au moins une dimension d'ouverture de l'ouverture d'un objet rigide en boucle fermée (CL1, CL2) porté par chaque individu,
- fournir à une machine d'apprentissage : les photos et les dimensions d'ouverture mesurées, afin que la machine d'apprentissage puisse :
- mesurer une taille de l'articulation (J1, J2) et une taille de la partie de port (WP1, WP2) de chaque individu,
- associer la dimension d'ouverture à une taille de l'articulation (J1, J2) et/ou à une taille de la partie de port (WP1, WP2),
le procédé mis en œuvre par ordinateur comprenant en outre :
un procédé de prédiction mis en œuvre par ordinateur pour la fabrication ou pour la détermination de la taille d'un bijou formant un objet rigide en boucle fermée (CL1, CL2) destiné à être porté par un utilisateur autour d'un membre de l'utilisateur,
dans lequel le procédé de prédiction mis en œuvre par ordinateur comprend :
• une phase de prédiction présentant les étapes suivantes :
- prendre au moins une photo d'un membre d'un utilisateur, ladite au moins une photo montrant au moins la partie de port (WP1, WP2) et l'articulation (J1, J2) de l'utilisateur,
- fournir la photo à une machine d'apprentissage entraînée selon ledit procédé d'entraînement mis en œuvre par ordinateur, afin que la machine d'apprentissage puisse :
- mesurer une taille de l'articulation (J1, J2) et une taille de la partie de port (WP1, WP2) de l'utilisateur,
- prédire une dimension d'ouverture d'ajustement d'un objet rigide en boucle fermée (CL1, CL2) choisi par l'utilisateur.

2. Procédé mis en œuvre par ordinateur, selon la revendication 1, dans lequel la phase d'entraînement du procédé d'entraînement mis en œuvre par ordinateur comprend :
- l'enregistrement, pour chaque individu, d'au moins une information relative à l'ajustement de l'objet rigide en boucle fermée (CL1, CL2) à la partie de port (WP1, WP2) de l'individu, afin que la machine d'apprentissage puisse associer l'information d'ajustement à la dimension d'ouverture, à la taille de l'articulation (J1, J2) et à la taille de la partie de port (WP1, WP2).

3. Procédé mis en œuvre par ordinateur selon la revendication 2, dans lequel, au cours du procédé d'entraînement mis en œuvre par ordinateur, l'information d'ajustement est reçue de l'individu et est choisie dans une liste comprenant au moins un des critères suivants :
- l'objet rigide en boucle fermée (CL1, CL2) s'ajuste de manière adéquate la partie de port (WP1, WP2),
- l'objet rigide en boucle fermée (CL1, CL2) s'ajuste de manière trop lâche la partie de port (WP1, WP2),
- l'objet rigide en boucle fermée (CL1, CL2) s'ajuste de manière trop serrée la partie de port (WP1, WP2),
- l'objet rigide en boucle fermée (CL1, CL2) ne passe pas sur l'articulation (J1, J2),
- l'objet rigide en boucle fermée (CL1, CL2) n'est pas retenu par l'articulation (J1, J2).

4. Procédé mis en œuvre par ordinateur selon l'une des revendications 1 à 3, dans lequel, au cours du procédé d'entraînement mis en œuvre par ordinateur, l'étape de mesure d'au moins une dimension d'ouverture de l'ouverture d'un objet rigide en boucle fermée (CL1, CL2) porté par chaque individu comprend les étapes suivantes :
- prendre au moins une photo de l'ouverture de l'objet rigide en boucle fermée (CL1, CL2),
- fournir la photo de l'ouverture de l'objet rigide en boucle fermée à la machine d'apprentissage afin que la machine d'apprentissage puisse mesurer la dimension d'ouverture.

5. Procédé mis en œuvre par ordinateur selon l'une des revendications 1 à 4, dans lequel, au cours du procédé d'entraînement mis en œuvre par ordinateur, chaque étape de prise d'une photo comporte une étape de positionnement d'un objet ou d'un modèle avec une dimension prédéterminée dans le champ de l'imagerie.

6. Procédé mis en œuvre par ordinateur selon l'une des revendications 1 à 5,
dans lequel l'objet rigide en boucle fermée (CL1, CL2) est un anneau,
dans lequel le membre est un doigt, et de préférence l'annulaire,
dans lequel la partie de port (WP1, WP2) est une phalange, de préférence la phalange proximale,
et dans lequel l'articulation (J1, J2) est l'articulation entre deux phalanges, et de préférence l'articulation entre la phalange proximale et la phalange intermédiaire.

7. Procédé mis en œuvre par ordinateur selon l'une des revendications 1 à 6, dans lequel, au cours du procédé d'entraînement mis en œuvre par ordinateur, la machine d'apprentissage associe la dimension d'ouverture à au moins un parmi :
- la largeur (WP1D, WP2D) de la partie de port (WP1, WP2),
- la largeur (J1D, J2D) de l'articulation (J1, J2),
- le rapport entre la largeur de la partie de port (WP1, WP2) et la largeur de l'articulation (J1, J2),
- la forme du membre.

8. Procédé mis en œuvre par ordinateur selon l'une des revendications 1 à 7,
dans lequel, au cours du procédé d'entraînement mis en œuvre par ordinateur, l'étape de prise d'une photo du membre comprend une étape de rétro-éclairage du membre, de manière à photographier un contour extérieur du membre, et :
- un contour ou une forme des os dudit membre, et/ou
- une épaisseur de peau dudit membre, et/ou
- un contour ou une forme de la chair dudit membre.

9. Procédé mis en œuvre par ordinateur selon la revendication 8, dans lequel, au cours du procédé d'entraînement mis en œuvre par ordinateur, la machine d'apprentissage associe la dimension d'ouverture à au moins un parmi :
- une largeur d'os,
- une épaisseur de peau,
- une largeur de chair.

10. Procédé mis en œuvre par ordinateur selon l'une des revendications 1 à 9,
dans lequel le procédé comprend en outre :
- la fabrication ou le réglage de la taille d'un objet rigide en boucle fermée (CL1, CL2) selon la dimension d'ouverture d'ajustement prédite selon ledit procédé de prédiction mis en œuvre par ordinateur, ou
- le choix, dans un ensemble d'objets rigides en boucle fermée préfabriqués, d'un objet rigide en boucle fermée (CL1, CL2) selon la dimension d'ouverture d'ajustement prédite qui est prédite selon ledit procédé de prédiction mis en œuvre par ordinateur.

11. Procédé mis en œuvre par ordinateur selon la revendication 10, dans lequel l'étape de prise d'une photo du membre de l'utilisateur pendant la phase de prédiction est effectuée par l'utilisateur, et la photo est envoyée par l'utilisateur à un serveur distant,
et dans lequel l'objet rigide en boucle fermée (CL1, CL2) fabriqué, réglé ou choisi est expédié à l'utilisateur.
